Europäisches Patentamt

European Patent Office

Office européen des brevets

(19)

(11) Veröffentlichungsnummer: **0 074 031**
**B1**

(12) # EUROPÄISCHE PATENTSCHRIFT

(45) Veröffentlichungstag der Patentschrift:
**13.02.85**

(51) Int. Cl.⁴: **C 08 G 69/16, C 08 G 69/46**

(21) Anmeldenummer: **82107880.5**

(22) Anmeldetag: **27.08.82**

(54) **Verfahren zur Herstellung von Polycaprolactam.**

(30) Priorität: **02.09.81 DE 3134717**

(43) Veröffentlichungstag der Anmeldung:
**16.03.83 Patentblatt 83/11**

(45) Bekanntmachung des Hinweises auf die Patenterteilung:
**13.02.85 Patentblatt 85/7**

(84) Benannte Vertragsstaaten:
**BE CH DE GB IT LI NL**

(56) Entgegenhaltungen:
**EP - A - 0 000 397**
**EP - A - 0 005 466**
**DE - A - 2 501 348**

(73) Patentinhaber: **BASF Aktiengesellschaft,
Carl-Bosch-Strasse 38, D-6700 Ludwigshafen (DE)**

(72) Erfinder: **Strehler, Hugo, Dr., Carostrasse 12,
D-6710 Frankenthal (DE)**
Erfinder: **Hoerauf, Werner, Dr., Homburger Strasse 10,
D-6700 Ludwigshafen (DE)**
Erfinder: **Urbanek, Friedrich, Dr., Edith-Stein-Strasse 1,
D-6707 Schifferstadt (DE)**

**Beschreibung**

Gegenstand der Erfindung ist ein Verfahren zur Herstellung von Polycaprolactam durch Polymerisation von ε-Caprolactam, wobei man zusätzlich ε-Caprolactam enthaltenden wäßrigen Extrakt, der durch Extraktion von Polycaprolactam mit Wasser erhalten worden ist, mitverwendet.

Bei der Herstellung von Caprolactam erhält man zunächst Polycaprolactam mit einem Gehalt an extrahierbaren Anteilen von ca. 10%. Aus dem Monomeren enthaltenden Polycaprolactam werden diese nach bekannten Verfahren durch Wasser extrahiert. Üblicherweise wird die so erhaltene wäßrige Lösung eingedampft und wieder auf Caprolactam aufgearbeitet. Es wurde auch schon versucht, den wäßrigen Extrakt lediglich zu konzentrieren und wieder als Ausgangsstoff zusammen mit ε-Caprolactam bei der Polymerisation zu Polycaprolactam zu verwenden (vgl. DE-OS 2 501 348 und 2 732 328). Sobald dieser Vorgang jedoch mehrmals wiederholt wird, verändern sich die Eigenschaften des Polycaprolactams dahingehend, daß es die Qualitätsanforderungen für die Herstellung von Fäden und Fasern nicht mehr erfüllt.

Es war deshalb die technische Aufgabe gestellt, die Rückführung von wäßrigen Extrakten aus der Extraktion von Polycaprolactam in die Polymerisation so zu gestalten, daß das erzeugte Polycaprolactam trotz mehrfacher Rückführung des wäßrigen Extrakts den Qualitätsanforderungen für die Herstellung von Fäden und Fasern genügt.

Diese Aufgabe wird gelöst in einem Verfahren zur Herstellung von Polycaprolactam durch Polymerisation von ε-Caprolactam, wobei man zusätzlich ε-Caprolactam enthaltenden wäßrigen Extrakt, der durch Extraktion von Polycaprolactam mit Wasser erhalten worden ist, mitverwendet, dadurch gekennzeichnet, daß der wäßrige Extrakt weniger als 5,0 Gew.-% Oligomere des Caprolactams, bezogen auf das im wäßrigen Extrakt enthaltene monomere Caprolactam, enthält.

Das neue Verfahren hat den Vorteil, daß trotz mehrfacher Rückführung wäßrigen Extrakts das erzeugte Polycaprolactam den Anforderungen für die Herstellung von Fäden und Fasern genügt.

Die Polymerisation von Caprolactam wird vorzugsweise kontinuierlich durchgeführt, z. B. in senkrecht stehenden Reaktionszonen bei Temperaturen von 240 bis 280° C. Ein geeignetes Verfahren wird beispielsweise beschrieben in der DE-AS 1 495 198. Dieses Verfahren ist besonders geeignet, da es erlaubt, bis zu 15% Wasser in den oben erweiterten Teil der Reaktionszone zuzuführen. Der aus der Extraktion von Polycaprolactam stammende wäßrige Extrakt wird zusammen mit monomerem Caprolactam oben in die Reaktionszone zugeführt und das Wasser verdampft und in dem Maße abgeleitet, wie es zugeführt wird. Das so erhaltene Polycaprolactam wird wiederum mit Wasser extrahiert und der Extrakt wieder oben der Polymerisation zugesetzt.

Ein wesentliches Merkmal der Erfindung ist es, daß der wäßrige Extrakt weniger als 5,0 Gew.-%, z. B. 0,1 bis weniger als 5,0 Gew.-% Oligomere des Caprolactams, bezogen auf das im wäßrigen Extrakt enthaltene monomere Caprolactam, enthält. Oligomere haben in der Regel einen Polymerisationsgrad n von 2 bis 9. Insbesondere enthalten sie dimere und trimere cyclische Oligomere. Vorteilhaft enthält der verwendete wäßrige Extrakt weniger als 4,0 Gew.-%, z. B. 0,1 bis 4,0 Gew.-% dimere und trimere cyclische Oligomere.

Geeignete wäßrige Extrakte mit einem niedrigen Oligomerengehalt erhält man z. B. durch Konzentrieren des wäßrigen Extrakts und Abtrennen der ausgefallenen schwerlöslichen Oligomeren. Vorzugsweise erhält man einen geeigneten wäßrigen Extrakt jedoch durch partielle Extraktion von Polycaprolactam. Hierbei wird in einer ersten Stufe Polycaprolactam bei einer Temperatur von 80 bis 120° C im Gegenstrom mit Wasser extrahiert, wobei man je Tonne Polycaprolactam 0,2 bis 0,8 Tonnen Wasser anwendet. Hierbei wird im wesentlichen monomeres Caprolactam extrahiert, und die schwerer löslichen Oligomeren verbleiben noch im Polycaprolactam. Der so erhaltene wäßrige Extrakt hat in der Regel Gehalt an monomerem Caprolactam von 15 bis 25 Gew.-% und einen Oligomerengehalt von 1 bis zu 5,0 Gew.-%, bezogen auf Caprolactam. Die im Polycaprolactam verbliebenen Oligomeren werden dann in einer zweiten Stufe bei 80 bis 120° C extrahiert und der Extrakt anderweitig verwendet oder aufgearbeitet. Die beiden Extraktionszonen können auch zu einer Gesamteinheit vereinigt sein, wie z. B. in der DE-AS 1 209 293 beschrieben wird. Hierbei wird Polycaprolactam im Gegenstrom mit Wasser extrahiert, etwa in der Mitte der Extraktionszone der stark oligomerenhaltige Extrakt entnommen und am Kopf der Extraktionszone ein oligomerenarmer Extrakt mit ca. 22 Gew.-% Caprolactam erhalten.

Der so erhaltene oligomerenarme wäßrige Extrakt mit 15 bis 25 Gew.-% Caprolactam kann direkt der Polymerisation zugeführt werden. Vorteilhaft führt man jedoch eine Vorkonzentration z. B. bis auf 50 bis 90 Gew.-% Caprolactam durch. Ein geeignetes Verfahren hierfür wird in der DE-OS 2 501 348 beschrieben. Zweckmäßig wird der Extrakt so weit konzentriert, daß bei der Rückführung in den Kopf der Polymerisationszone der Wassergehalt 15 Gew.-% nicht überschreitet.

Vorteilhaft beträgt die Menge an Oligomeren, die mit dem wäßrigen Extrakt der Polymerisation zugeführt wird, <0,6 Gew.-%, bezogen auf die Menge an frischem Caprolactam und der mit dem wäßrigen Extrakt zugeführten Menge an Caprolactam.

Das nach dem Verfahren der Erfindung erhaltene Polycaprolactam eignet sich zur Herstellung von Fäden und Fasern.

Das Verfahren nach der Erfindung sei in den folgenden Beispielen veranschaulicht.

### Vergleichsbeispiel

Man extrahiert stündlich 1,7 t Polycaprolactam, das 10 Gew.-% Monomere und 2 Gew.-% Oligomere enthält, mit 1500 l entsalztem Wasser bei 100° C im Gegenstrom. Der Extrakt enthält 11,4 Gew.-% Caprolactam und dessen Oligomere mit einem Gehalt an Oligomeren von 14 Gew.-%, bezogen auf Caprolactam. Dieser Extrakt wird in ständiger Wiederholung mit ca. 1700 kg/h frischem Caprolactam polymerisiert, das erhaltene Polycaprolactam wie oben beschrieben extrahiert und dann getrocknet. Nach fünf Durchgängen erhält man Polycaprolactam mit einer rel. Viskosität von 2,7 und einem Restextraktgehalt von 0,6 Gew.-% mit folgender Zusammensetzung der Oligomeren

| | |
|---|---|
| Dimere | 22% |
| Trimere | 24% |
| Tetramere | 22% |
| Pentamere | 16% |
| Hexamere | 4% |
| Heptamere | 2% |

Das Polycaprolactam wird zu Fäden mit einem Titer von 44 fg versponnen und die Fäden verstreckt. Die Streckausbeute beträgt 58%. Je 100 km Fadenlänge werden 1654 Knötchen festgestellt.

### Beispiel

Man extrahiert stündlich 1,7 t Polycaprolactam, das 10 Gew.-% Caprolactam und 2 Gew.-% Oligomere enthält, mit 700 l entsalztem Wasser bei 100° C im Gegenstrom in einer ersten Stufe. Der Extrakt enthält 18 Gew.-% Caprolactam und 0,7 Gew.-% Oligomere (das sind 3,8 Gew.-% Oligomere, bezogen auf den Gehalt an Caprolactam).

Der in einer nachfolgenden Extraktion mit 800 l Wasser/h erhaltene Extrakt mit ca. 2 Gew.-% Caprolactam und ca. 2,2 Gew.-% Oligomere wird anderweitig aufgearbeitet.

Der Extrakt aus der ersten Stufe wird in ständiger Wiederholung zusammen mit ca. 1700 kg/h frischem Caprolactam polymerisiert, das Polycaprolactam wie oben beschrieben extrahiert und getrocknet. Nach fünf Durchgängen erhält man Polycaprolactam mit einer rel. Viskosität von 2,7 und einem Restextraktgehalt von 0,6 Gew.-% mit folgender Zusammensetzung:

| | |
|---|---|
| Dimere | 7% |
| Trimere | 21% |
| Tetramere | 22% |
| Pentamere | 16% |
| Hexamere | 4% |
| Heptamere | 2% |

Das Polycaprolactam wird zu Fäden mit einem Titer von 44 fg versponnen und die Fäden verstreckt. Die Streckausbeute beträgt 98%. Je 100 km Fadenlänge sind 48 Knötchen feststellbar.

### Patentansprüche

1. Verfahren zur Herstellung von Polycaprolactam durch Polymerisation von ε-Caprolactam, wobei man zusätzlich ε-Caprolactam enthaltenden wäßrigen Extrakt, der durch Extraktion von Polycaprolactam mit Wasser erhalten worden ist, als Ausgangsstoff mitverwendet, dadurch gekennzeichnet, daß der wäßrige Extrakt weniger als 5,0 Gew.-% Oligomere des ε-Caprolactams, bezogen auf das im wäßrigen Extrakt enthaltene monomere ε-Caprolactam, enthält.

2. Verfahren nach Anspruch 1, dadurch gekennzeichnet, daß man einen wäßrigen Extrakt verwendet, der durch partielle Extraktion von Polycaprolactam erhalten worden ist.

### Claims

1. A process for the preparation of polycaprolactam by polymerizing ε-caprolactam, an aqueous extract which contains ε-caprolactam and has been obtained by extraction of polycaprolactam with water being co-used as starting material, wherein the aqueous extract contains less than 5.0% by weight of oligomers of ε-caprolactam, based on the monomeric ε-caprolactam contained in the aqueous extract.

2. A process as claimed in claim 1, wherein an aqueous extract which has been obtained by partial extraction of polycaprolactam is used.

### Revendications

1. Procédé de préparation de polycaprolactame par polymérisation de ε-caprolactame, dans lequel on emploie comme produit de départ additionnel un extrait aqueux, contenant de la ε-caprolactame et obtenu par une extraction à l'eau de la polycaprolactame, caractérisé en ce que l'extrait aqueux possède une teneur en oligomères de la ε-caprolactame inférieure à 5,0% du poids de la ε-caprolactame monomère contenue dans cet extrait aqueux.

2. Procédé suivant la revendication 1, caractérisé en ce que l'on emploie un extrait aqueux obtenu par une extraction partielle de la polycaprolactame.